# DEMANDE DE BREVET EUROPEEN

(11) **EP 4 807 348 A1**
(43) Date de publication de la demande: **16.09.2026**
(21) Numéro de dépôt: 26164676.4
(22) Date de dépôt: 13.03.2026
(51) Int. Cl.: G01N 21/89, G01N 21/894, G06T 7/00, G01N 21/88

(54) **PROCÉDÉ ET SYSTÈME POUR LA DÉTECTION AUTOMATIQUE DE CRIQUES DE RIVE DANS UNE TÔLE MÉTALLIQUE**

(30) Priorité: 14.03.2025 FR 2502601
(71) Demandeur: Deepgray Vision, 78400 Chatou (FR)
(72) Inventeur: PEYSSARD, Mathieu, 78400 CHATOU (FR)
(74) Mandataire: Regimbeau

(57) **Abrégé**

Procédé de détection de criques, notamment de criques fermées, sur une tôle de métal (**10**), apparaissant en fabrication, comportant des étapes de :

- déplacement relatif de ladite tôle de métal (**10**) par rapport à un dispositif d'acquisition (**20**) selon un axe longitudinal ;

- acquisitions de premières et de deuxièmes images numériques, en alternance, par un capteur optique (**21**), lesdites premières et deuxièmes images numériques étant acquises en synchronisation avec l'activation respectivement d'une première source lumineuse (**22**) et d'une seconde source lumineuse (**23**), ladite première source lumineuse (**22**) étant située d'un côté opposé de ladite tôle de métal (**10**) par rapport audit capteur optique (**21**) et ladite seconde source lumineuse (**23**) étant située du même côté de ladite tôle de métal (**10**) que ledit capteur optique (**21**) ;

- application d'au moins une chaîne de détection auxdites premières et deuxièmes images numériques, comportant un ensemble d'opérateurs adaptés à la détection de motifs déterminés, par un dispositif de traitement (**40**) ;

- segmentation dans les images obtenues de ladite au moins une chaîne de détection, par ledit dispositif de traitement (**40**), afin d'obtenir des zones d'intérêt correspondant à des probabilités de présence de criques.

## Description

### DOMAINE TECHNIQUE

La présente proposition est relative à la détection de défauts dans des pièces métalliques planes telles que des tôles. Elle s'applique particulièrement à un procédé de détection de défauts de type criques dans des tôles ou bandes défilantes en métal, par exemple lors de différentes phases d'un processus de fabrication.

En métallurgie, lors de la fabrication de tôles, des fissures peuvent apparaître depuis les bords, que l'on appelle généralement criques de rives.

Elles apparaissent généralement lors des processus de mise en forme du métal, tels que le laminage, l'estampage ou le pliage, en raison de contraintes mécaniques ou thermiques importantes qui dépassent la résistance locale du matériau. Ces criques peuvent être causées par plusieurs facteurs, notamment des défauts de fabrication, des impuretés dans le matériau, des contraintes résiduelles, ou des traitements thermiques mal adaptés.

Les criques de rives peuvent avoir des effets négatifs importants, car elles créent des points de faiblesse structurelle dans la pièce métallique, ce qui peut entraîner une propagation des fissures sous contrainte et, à terme, une défaillance de la pièce.

Sur une chaîne de production, les ruptures de bande occasionnent un arrêt de la production qui peut s'étendre sur plusieurs heures, voire sur plusieurs jours. Elles peuvent en outre endommager les équipements de la ligne de production, nécessitant leur remplacement ou leur réparation.

On cherche donc à minimiser l'apparition des criques de rives en optimisant les paramètres de mise en forme (comme la température, la vitesse de déformation, ou les pressions appliquées) et en s'assurant de la qualité du métal brut utilisé. Toutefois, ces précautions ne permettent nullement de se prémunir de l'apparition de ces criques de rives.

Ainsi, les aciers à haute teneur en silicium, destinés notamment aux applications électriques (batteries, moteurs électriques, transformateurs...) sont particulièrement propices à l'apparition de criques. Sur les lignes de fabrication de ce type de tôles métalliques, on estime la fréquence des casses de bande à plusieurs par mois, en l'absence de contrôle des criques.

Des contrôles sont donc effectués régulièrement, éventuellement lors de différentes phases du processus de fabrication, pour vérifier l'apparition de criques. Lorsque ces contrôles sont effectués visuellement par des opérateurs humains, les temps nécessaires sont longs et ralentissent le processus de fabrication. En outre, les contrôles humains sont généralement générateurs d'erreurs et ne sont plus adaptés aux cadences de fabrication actuelles.

Des outils automatiques ont été proposés afin d'aider à la détection de criques dans une tôle de métal, notamment en cours de fabrication.

Par exemple, le brevet EP2999557B1 propose à détecter des contraintes physiques sur la tôle à différentes étapes, et d'en déduire une prédiction sur l'apparition de criques.

Un autre exemple d'outil est fourni par le brevet EP4141428B1 qui propose de disposer une pluralité de détecteurs sur les bords de la tôle et de détecter le passage de rayonnements X à travers la tôle, représentatifs de la présence d'une fissure. Un tel mécanisme ne permet que la détection de criques ouvertes, c'est-à-dire laissant passer le rayonnement. Cette approche ne permet pas de connaître la profondeur réelle des criques lorsqu'elles sont fermées ou partiellement fermées (c'est-à-dire ne traversant pas la tôle d'une face à l'autre). Or, la dangerosité des criques est liée à leur profondeur, et pas seulement au fait qu'elles soient ouvertes (c'est-à-dire traversantes).

D'autres mécanismes ont été proposés utilisant la lumière visible et des caméras optiques. Elles proposent également de baser la détection sur la détection de faisceaux de lumières traversant la tôle, et souffrent donc des mêmes limites que l'approche précédente.

D'une façon générale, les différents outils proposés dans l'état de la technique proposent des détections de criques ouvertes, et n'intégrant pas la détection des criques fermées. La résolution également proposée ne permet pas nécessairement la détection de criques très petites, notamment sur les lignes de production les plus rapides. Les performances en détection décroissent effectivement avec la vitesse de défilement de la tôle par rapport au détecteur et avec l'épaisseur de la tôle. Ces mécanismes présentent donc des limites qui ne permettent pas de garantir un niveau de performances élevé pour la détection des criques.

Il est donc recherché un outil de détection, ou d'aide à la détection, de l'apparition des criques améliorant la situation par rapport à l'état de la technique.

Il est plus particulièrement recherché un système et un procédé performants, c'est-à-dire avec un taux de détection de criques le plus proche possible de 100%, ce qui nécessite de pouvoir détecter les criques non-ouvertes et une très haute résolution d'inspection.

### EXPOSÉ DE L'INVENTION

Il est proposé un procédé de détection de criques, notamment de criques fermées, sur une tôle de métal (10), apparaissant en fabrication, comportant des étapes de :
- déplacement relatif de ladite tôle (10) par rapport à un dispositif d'acquisition (20) selon un axe longitudinal ;
- acquisitions de premières et de deuxièmes images numériques, en alternance, par un capteur optique (21), lesdites premières et deuxièmes images numériques étant acquises en synchronisation avec l'activation respectivement d'une première source lumineuse (22) et d'une seconde source lumineuse (23), ladite première source lumineuse (22) étant située d'un côté opposé de ladite tôle (10) par rapport audit capteur optique (20) et ladite seconde source lumineuse (23) étant située du même côté de ladite tôle (10) que ledit capteur optique (21) ;
- application d'au moins une chaîne de détection auxdites premières et deuxièmes images numériques, comportant un ensemble d'opérateurs adaptés à la détection de motifs déterminés, par un dispositif de traitement (40) ;
- une segmentation dans les images obtenues de ladite au moins une chaîne de détection, par ledit dispositif de traitement (40), afin d'obtenir des zones d'intérêt correspondant à des probabilités de présence de criques.

Ce procédé permet d'atteindre des performances en détection proches de 100%, y compris pour des criques non-ouvertes, c'est-à-dire ne laissant pas passer la lumière. Selon les paramétrages, ce procédé permet de détecter des criques de petites tailles, et même de faible profondeur (à partir de 1 mm, par exemple).

Il est également possible d'atteindre des taux de fausse alarme proches de 0%, ce qui permet d'éviter des interruptions de la production nécessaire à un contrôleur humain pour vérifier si la crique détectée est véritablement une crique ou non.

En outre, le procédé se base sur un système simple et peu coûteux, comportant une ou deux caméras classiques, des sources lumineuses classiques et un dispositif de traitement adapté au traitement logiciel. Il peut donc être aisément déployé sur différentes lignes de production, et même en plusieurs points de ces lignes de production afin de contrôler l'apparition des criques tout au long du processus de fabrication des tôles.

Suivant des modes de réalisation préférés, le procédé comprend une ou plusieurs des caractéristiques suivantes qui peuvent être utilisées séparément ou en combinaison partielle entre elles ou en combinaison totale entre elles :
- Le procédé comporte en outre une étape de qualification de criques à partir desdites zones d'intérêt, comprenant, pour une zone d'intérêt, une assignation d'une classe géométrique et/ou d'une gravité ;
- ladite classe géométrique appartient à un ensemble prédéterminé de formes de criques, tels que « convexe perpendiculaire », « convexe orientée vers l'amont », « convexe orientée vers l'aval », « concave », « trou en rive », « encoche » ;
- une gravité pour ladite tôle et/ou pour la fabrication de ladite tôle est déterminée à partir de ladite classe géométrique et d'un ensemble de caractéristiques mesurées à partir de ladite zone d'intérêt et comparées à des valeurs types associées à ladite classe géométrique ;
- une pluralité de chaînes de détection sont appliquée, ledit procédé comportant une obtention de plans de détection, par exemple en effectuant un « OU » logique des résultats d'un ensemble de chaînes de détection, ladite segmentation consistant alors à déterminer une ou plusieurs images segmentées, chacune à partir d'un ensemble de plans de détection, et à déterminer lesdites zones d'intérêt à partir desdites images segmentées ;
- un traitement différencié peut être appliqué à ladite au moins chaîne de détection, notamment un changement de résolution ;
- Le procédé comporte en outre un prétraitement desdites secondes images numériques consistant à effectuer un lissage par moyenne des pixels de ladite image ligne par ligne selon ledit déplacement relatif ;
- ledit capteur optique (21) et lesdites première et seconde sources lumineuses (22, 23) sont commandés en fonction d'un rythme fourni par un détecteur de mouvement (31) mesurant ledit déplacement relatif

Un autre objet concerne un système pour la détection de criques sur une tôle de métal (10) apparaissant en fabrication, comportant un dispositif d'acquisition (20), ladite tôle étant mise en mouvement par rapport audit dispositif d'acquisition (20) par un dispositif de déplacement (30), et un dispositif de traitement (40) adapté pour :
- piloter des acquisitions de premières et de deuxièmes images numériques, en alternance, par un capteur optique (21), lesdites premières et deuxièmes images numériques étant acquises en synchronisation avec l'activation respectivement d'une première source lumineuse (22) et d'une seconde source lumineuse (23), ladite première source lumineuse (22) étant située d'un côté opposé de ladite tôle (10) par rapport audit capteur optique (21) et ladite seconde source lumineuse (23) étant située du même côté de ladite tôle (10) que ledit capteur optique (21) ;
- appliquer au moins une chaîne de détection auxdites premières et deuxièmes images numériques, comportant un ensemble d'opérateurs adaptés à la détection de motifs déterminés ;
- effectuer une segmentation dans lesdites images obtenus de ladite au moins une chaîne de détection, afin d'obtenir des zones d'intérêt correspondant à des probabilités de présence de criques

Un autre aspect concerne un programme d'ordinateur comportant des instructions pour mettre en œuvre un procédé tel que précédemment décrit lorsqu'il est exécuté par un processeur.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 illustre un système pour la détection de criques et son contexte d'utilisation, selon un mode de réalisation ;
- la figure 2 schématise un exemple de commandes des différents dispositifs d'un système selon un mode de réalisation ;
- la figure 3 représente deux exemples de première, respectivement deuxième, images obtenues selon des modes de réalisation ;
- la figure 4 schématise un mode de réalisation possible pour une chaîne de traitement, selon un mode de réalisation ;
- la figure 5 illustre des étapes de traitement mises en œuvre par un dispositif de traitement, selon des modes de réalisation ;
- La figure 6 illustre un ensemble de formes ou classes de criques ;
- La figure 7 illustre des caractéristiques mesurées à partir d'une zone d'intérêt, selon un mode de réalisation.

### EXPOSÉ DÉTAILLÉ DE MODES DE RÉALISATION PARTICULIERS

Il est proposé un procédé et un système pour la détection de criques dans des tôles de métal. Ce procédé et ce système peuvent s'appliquer à différents types de tôles et de métaux, notamment ceux pour lesquels l'apparition de criques est probable et problématique.

On rappelle qu'une crique de rive est un défaut de surface se manifestant sous la forme d'une microfissure ou d'une petite fissure localisée à proximité des bords ou arêtes d'une pièce métallique. Elle est généralement due à des contraintes mécaniques ou thermiques excessives appliquées durant les processus de mise en forme, comme le laminage, le forgeage, le pliage, ou la découpe. Ces criques sont des points faibles qui peuvent se propager sous l'effet de contraintes supplémentaires, menaçant ainsi l'intégrité de la pièce.

Une crique peut être ouverte ou fermée. On appelle crique ouverte une crique traversante, c'est-à-dire laissant passer la lumière, entre les deux faces de la tôle. Au contraire, une crique fermée n'est pas traversante et ne laisse donc passer la lumière.

En métallurgie, on appelle rives les bords d'une pièce métallique. Les criques de rives se distinguent des autres types de fissures car elles se concentrent aux extrémités et bords des surfaces, là où les contraintes mécaniques sont souvent plus concentrées en raison de la géométrie de la pièce.

Ces criques peuvent être dommageables pour la tôle, car elles forment des points de fragilité, pouvant provoquer la cassure de la tôle lors de sa manipulation ultérieure, de son transport ou de son exploitation pour la fabrication de produits finis ou intermédiaires. Elles nuisent également à une évaluation de qualité par le client.

Les criques peuvent également être dommageables pour le système de fabrication de la tôle lui-même. Certains types de crique (notamment du fait de leurs orientations) peuvent accrocher des équipements de la ligne de fabrication (organes de guidages par exemple), et peuvent les endommager, en plus d'aggraver les criques elles-mêmes.

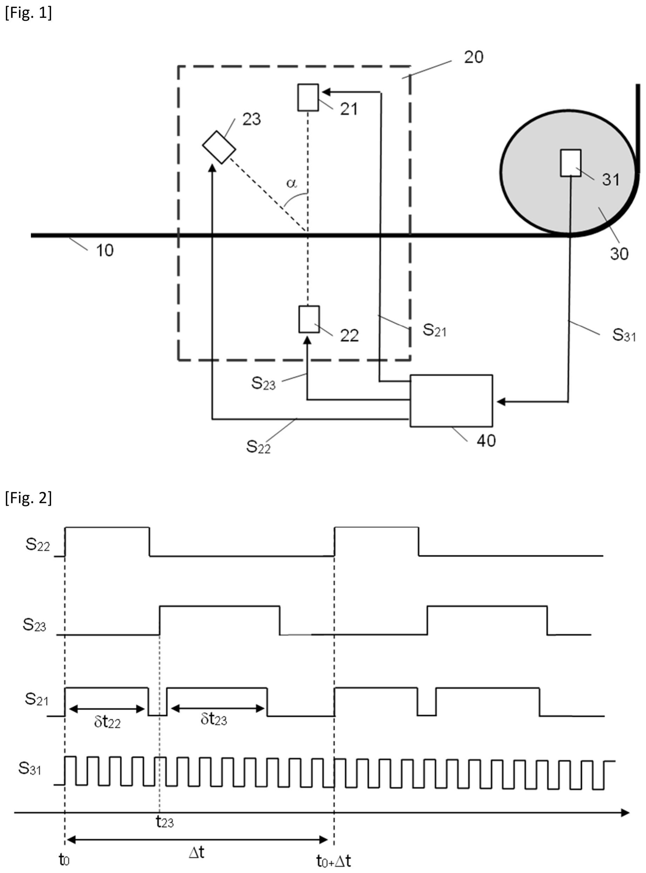

La **figure 1** illustre un système pour la détection de criques sur une tôle de métal 10, pouvant par exemple être mis en place sur une ligne de fabrication de cette ligne.

Il est entendu que sur une même ligne de fabrication, plusieurs tels systèmes peuvent être positionnés, à différents points, afin de détecter l'apparition de criques au plus tôt. Il est également possible de mettre en place un tel système hors d'une ligne de fabrication, par exemple à des fins de contrôle de qualité ou de conformité à des standards.

Ce système comporte un dispositif d'acquisition 20 et un dispositif de traitement 40. Il dispose également d'une interface permettant la réception d'information (vitesse...) provenant d'un dispositif de déplacement 30 de la tôle 10 par rapport au dispositif d'acquisition 20,

Le dispositif de déplacement 30 peut être un dispositif appartenant à la ligne de production. Typiquement et de façon connue en soi, les tôles 10 sont acheminées le long d'une ligne de fabrication où différents traitements physiques ou mécaniques sont appliqués.

Dans l'exemple de la figure 1, la tôle 10 est positionnée dans un plan horizontal et entraînée par un rouleau 30. La figure 1 représente une vue latérale, de profil, la tôle 10 étant perpendiculaire au plan de coupe.

Le dispositif d'acquisition 20 comprend un capteur optique 21, par exemple formé de deux caméras monochromes linéaires et deux sources lumineuses 22, 23, ainsi que les moyens de connexion à un dispositif de traitement 40.

Ces moyens de communication comprennent un réseau de communication local ou LAN (pour « *Local Area Network »* en anglais), permettant la transmission de message de contrôle depuis le dispositif de traitement 40 vers les équipements du dispositif d'acquisition 20, et des données depuis ces derniers vers le dispositif de traitement 40.

Le dispositif de traitement 40 peut être un ensemble de moyens électronique et informatiques prévus pour effectuer en temps réel et à très haute résolution des traitements numériques de données. Il peut s'agir d'un ordinateur ou d'un ensemble d'ordinateurs. Ces moyens sont très préférentiellement disponibles localement afin de minimiser les délais de transmission et être compatibles avec les contraintes de temps-réel de la détection de criques.

Il peut être prévu par ailleurs que ce dispositif de traitement 40 fasse appel également à des moyens de calcul déportés, par exemples à des ressources de calcul d'informatique en nuage (ou *« cloud computing* » en anglais) pour effectuer des tâches de post traitement ou d'intégration multi-systèmes.

Le dispositif de traitement 40 peut également inclure des circuits spécifiques pour le traitement de données, par exemple pour la conversion de signaux selon les formats ou niveaux de tension propres aux différents équipements depuis/vers des signaux adaptés à une interface numérique d'un ordinateur.

Le dispositif d'acquisition 20 est agencé de sorte qu'une première source lumineuse 22 est située d'un côté opposé de la tôle 10 par rapport au capteur optique 21 et qu'une seconde source lumineuse 23 est située du même côté de la tôle 10 que ce même capteur optique 21.

La ou les caméras du capteur optique 21 sont orientées perpendiculairement à la surface de la tôle 10.

Selon un mode de réalisation, elles peuvent être motorisées et placées au droit d'une position moyenne des rives. Deux caméras peuvent être utilisées, chacune étant associée à une rive, c'est-à-dire à un bord de la tôle 10.

Selon un autre mode de réalisation, le capteur optique 21 ne comporte qu'une unique caméra, celle-ci pouvant être placée au droit du centre de la largeur de la tôle 10.

Les sources lumineuses 22, 23 peuvent être de type linéaire éclairant ainsi la ligne de visée des caméras.

Préférentiellement, elles éclairent chacune toute la largeur de la tôle 10, au moins au niveau de la ligne de visée des caméras du capteur optique 21. Autrement dit, le capteur optique 21 va acquérir des images numériques des zones de la tôle 10 éclairées par l'une ou l'autre des sources lumineuses 22, 23.

La première source lumineuse 22 est de type diffusant.

Elle peut être positionnée de sorte que son axe de visée correspond à l'axe optique d'une caméra du capteur optique 21. Selon ce mode de réalisation, en présence d'une crique ouverte, la caméra vise directement dans la première source lumineuse 22.

Plus généralement, le capteur optique peut capturer la lumière émise par la première source lumineuse 22 et traversant des criques ouvertes de la tôle 10. En l'absence de crique ouverte, le capteur optique 21 ne peut pas (substantiellement) recevoir de lumière issue de la première source lumineuse.

La seconde source lumineuse 23 est placée du côté de la tôle observée par le capteur optique 21. Elle éclaire la ligne de visée sous un angle d'incidence α. Le capteur optique peut capturer la lumière réfléchie de la seconde source lumineuse.

Le capteur optique 21 est prévu pour acquérir des premières et deuxièmes images numériques en alternance, c'est-à-dire deux flux d'images numériques.

Ces premières et deuxièmes images numériques sont acquises en synchronisation avec l'activation respective de la première et de la seconde source lumineuse.

Autrement dit, les premières et seconde sources lumineuses sont actives selon une fréquence d'activation/désactivation.

Lorsque la première source lumineuse 22 est active, mais pas la seconde 23, le capteur optique 21 acquière une première image numérique.

Lorsque la seconde source lumineuse 23 est active, mais pas la première 22, le capteur optique 21 acquière une deuxième image numérique.

Selon un mode de réalisation, un rythme, par exemple un cycle périodique, est fourni par le déplacement relatif de la tôle 10 par rapport au dispositif d'acquisition 20 et la fréquence du dispositif d'acquisition 20. Ce rythme peut permettre au dispositif de traitement 40 de commander le capteur optique et les sources lumineuses. En particulier, il permet de commander le capteur optique en acquisition, et les sources lumineuses en activation et désactivation.

Il peut être fourni par un détecteur de mouvement 31 qui mesure ce déplacement relatif.

Ce détecteur de mouvement est typiquement un tachymètre. Un tachymètre est un instrument conçu pour mesurer la vitesse de rotation ou de déplacement d'un objet. Sa fonction principale est de mesurer le nombre de tours par minute (RPM) d'un dispositif en rotation 30, mais il peut également être calibré pour indiquer une vitesse de déplacement (par exemple, en mètre par sec).

Dans le mode de réalisation illustré par la figure 1, le tachymètre 31 mesure la rotation du dispositif de déplacement 30 qui est représentative du déplacement relatif de la tôle et du dispositif d'acquisition.

La **figure 2** illustre un exemple de telles commandes du dispositif d'acquisition 20 en fonction d'un rythme fourni par le tachymètre 31.

Le détecteur de déplacement (ou tachymètre) 31 fournit un signal S₃₁ au dispositif de traitement 40. Ce signal peut être un signal périodique, par exemple carré, dont la fréquence est liée, par exemple proportionnelle, à la vitesse de rotation du dispositif de déplacement 30. Il peut être défini par un nombre de « tops » (par exemple de fronts montants impulsionnels) par tour.

A partir de ce rythme délivré par le signal, on peut définir un cycle, ou période Δt, correspondant à un certain nombre de « tops », durant lequel les opérations suivantes sont effectuées. Ces opérations sont réitérées pour chaque nouveau cycle Δt.

A un instant t₀, le dispositif de traitement 40 fournit un signal S₂₂ pour activer la première source lumineuse 22.

Concomitamment ou après un bref décalage, le dispositif de traitement 40 fournit un signal S₂₁ pour déclencher une acquisition d'une première image numérique par le capteur optique 21, pendant un temps d'intégration δt₂₂. Le signal S21 repasse à un niveau bas (correspondant à une non-acquisition) avant la désactivation de la première source lumineuse 22. Ainsi, la première image numérique correspond effectivement à une zone éclairée uniquement par la première source lumineuse.

Dans un second sous-cycle, des commandes sont transmises pour inverser les activations des sources lumineuses et permettre la capture d'une deuxième image numérique.

A un instant t₂₃, le dispositif de traitement 40 fournit un signal S₂₃ pour activer la deuxième source lumineuse 23.

Concomitamment ou après un bref décalage, le dispositif de traitement 40 fournit un signal S₂₁ pour déclencher une acquisition d'une deuxième image numérique par le capteur optique 21, pendant un temps d'intégration δt₂₃. Le signal S21 repasse à un niveau bas (correspondant à une non-acquisition) avant la désactivation de la deuxième source lumineuse 23. Ainsi, la deuxième image numérique correspond effectivement à une zone éclairée uniquement par la deuxième source lumineuse 23.

Le nombre de « tops » par cycle est défini pour respecter les résolutions d'inspection du système.

Les temps d'acquisition δt₂₂ et δt₂₃ sont choisis en fonction des caractéristiques techniques du capteur optique et des sources lumineuses, et sont représentatifs des temps d'intégration requis pour fournir une qualité d'image optimale.

En particulier le temps d'acquisition δt₂₂ correspondant à la première image numérique est choisi de sorte à produire des pixels noirs en présence de tôle et blancs en absence de tôle (c'est-à-dire correspondant à la vue directe de la première source lumineuse par transparence à travers une crique dans la tôle).

Le temps d'acquisition δt₂₃ correspondant à la deuxième image numérique peut être choisi de sorte à produire des pixels en niveaux de gris et éviter les effets de saturation dans le noir ou le blanc. En particulier, il peut être asservi au niveau de gris moyen mesuré sur l'ensemble de la tôle 10.

Le dispositif de traitement 40 sauvegarde à la suite les lignes acquises, parallèlement, avec la première et la seconde source lumineuse.

Ainsi, des images numériques continues sous forme de bandes peuvent être obtenues, chacune représentative d'une vue de la tôle lorsqu'éclairée uniquement par l'une des deux sources lumineuses (c'est-à-dire par transparence ou par lumière incidente).

Le dispositif de traitement 40 est adapté pour synchroniser la constitution et la mémorisation des images acquises afin de rendre celle-ci superposables : autrement dit les pixels d'une image correspondent aux pixels de l'autre image pour un même point réel de la tôle 10.

La première image numérique est typiquement une image binaire, ou substantiellement binaire, dans laquelle des pixels blancs peuvent être représentatifs de la présence d'une crique.

La deuxième image numérique est typiquement une image en niveau de gris.

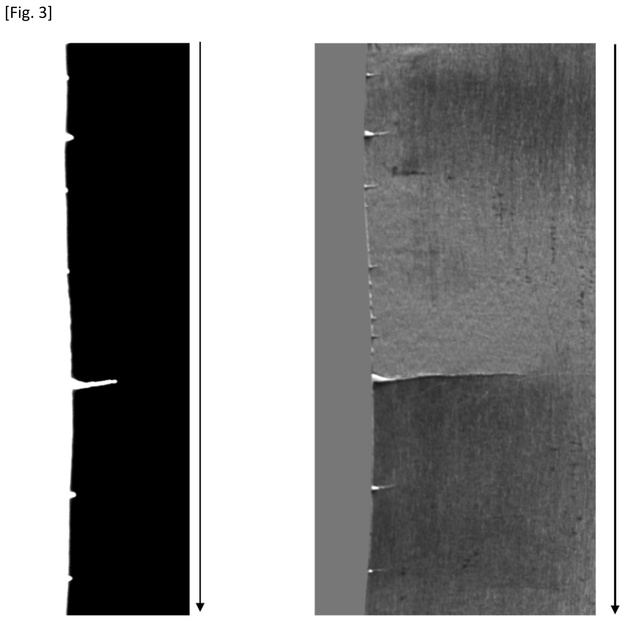

La **figure 3** représente un exemple de première image et de deuxième image numériques pour une même portion de tôle 10.

Les flèches correspondent au sens de construction des images, et, donc, au sens du déplacement relatif de la tôle 10 par rapport au dispositif d'acquisition 20.

Il est remarqué que les différences de niveaux de gris sur la deuxième image sont dues à la présence de criques ou de contraintes physiques dans la tôle, mais aussi au fait que celle-ci n'est pas nécessairement parfaitement plane dans le plan perpendiculaire à la prise de vue.

En effet, il est constaté des ondulations au niveau des rives de la tôle (bords longs), qui peuvent varier en fonction du métal (ou de l'alliage), de l'épaisseur de la tôle et du processus de fabrication.

Selon un mode de réalisation, une étape de prétraitement des secondes images numériques est mise en œuvre. Ce prétraitement consiste à effectuer un lissage par moyenne des pixels de cette image numérique, ligne par ligne selon le déplacement relatif.

Pour chaque ligne insérée dans la deuxième image en cours de constitution, on calcule une ligne moyenne.

Soient zᵢ le i^{ème} pixel de cette nouvelle ligne, et Zᵢ le i^{ème} pixel de la ligne moyenne.

On calcule une nouvelle ligne moyenne par mise à jour de la ligne moyenne existante en fonction de la nouvelle ligne insérée.

Ce calcul peut se faire par exemple par l'expression suivante, dans laquelle N représente une constante qui détermine une vitesse de normalisation : ${Z}_{i} ← \frac{N - 1}{N} {Z}_{i} + \frac{1}{N} {z}_{i}$

Le pixel zᵢ de la ligne courante peut alors être corrigé selon l'expression : ${z}_{i} ← {Z}_{out} \times \frac{{z}_{i}}{{Z}_{i}}$

Zₒᵤₜ représente le niveau de gris de normalisation souhaité.

On peut ainsi lisser les phénomènes liés aux ondulations des rives de la tôle 10. Les analyses ultérieures des niveaux de gris dans les secondes images cibleront ainsi, de façon plus pertinente, les phénomènes liés aux criques de rive.

Le dispositif de traitement 40 peut ensuite appliquer au moins une chaîne de détection aux premières et deuxièmes images numériques. Cette, ou ces, chaîne de détection comporte un ensemble d'opérateurs adaptés à la détection de motifs déterminés.

Seule une partie des première et deuxième images numériques peut être considérée. Cette partie correspond aux rives de la tôle 10 considérée. Cette partie peut donc se définir comme deux bandes, dans chaque image, correspondant aux deux rives de la tôle, dont la largeur peut être fixée comme paramètres. Cette largeur peut être fixée en fonction des paramètres d'acquisition et de la vitesse de traitement du dispositif de traitement 40, ainsi que de la résolution utilisée.

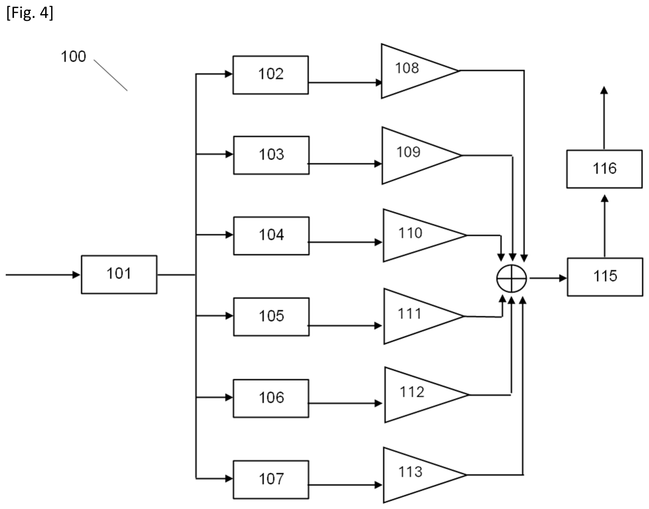

La **figure 4** illustre une chaîne de détection 100 selon un mode de réalisation particulier.

Cette chaîne de détection comporte notamment des opérateurs 102, 103, 104, 105, 106, 107 qui, chacun séparément, peuvent traiter les pixels de l'image fournie en entrée. Les résultats de ces différents opérateurs peuvent être combinés afin de fournir un résultat global de la chaîne de détection.

Le résultat de cette combinaison et de la chaîne de détection est donc une image, dans laquelle la valeur des pixels peut être utilisée, pour détecter l'apparition de criques, ou, plus précisément, déterminer, après segmentation, des zones d'intérêt correspondant à des probabilités de présence de criques.

Les opérateurs sont adaptés à la détection de motifs déterminés. Plus précisément, chaque opérateur peut être spécialisé pour la détection d'un motif ou d'un type de motifs déterminés.

Le procédé proposé étant particulièrement adapté à la détection de criques de rive, les types de défauts possibles peuvent être considérés comme étant en nombre limité. Dès lors, il est possible de considérer des opérateurs en fonction des types de défauts à détecter, et de la décomposition de ces types de défauts (ou criques) en formes, ou éléments, géométriques constitutifs de ces types de criques.

Dans l'exemple de la figure 4, six opérateurs sont prévus et adaptés pour la détection de formes horizontales, de formes verticales, de formes diagonales, de formes fines et longues, de pixels clairs et de pixels sombres.

Différentes technologies peuvent être utilisées pour chacun de ces opérateurs.

Par exemple, pour les trois premiers, on peut utiliser des technologies de type transformation en ondelettes.

Plus particulièrement, on peut utiliser une technique de transformation progressive en ondelettes, PWT (pour *« Progressive Wavelet Transform »* en anglais). Cette méthode permet de capturer les informations visuelles de manière multi-échelle, ce qui est particulièrement adapté pour des images numériques fournies par le capteur optique contenant des formes ou textures à différentes résolutions.

L'opérateur de détection de formes fines et longues peut être basé sur des calculs de gradient dans l'image numérique traitée.

Quoique six opérateurs particuliers sont présentés dans l'exemple illustré par la figure 4, il est clair que d'autres types d'opérateurs peuvent être considérés en sus ou à la place de ceux évoqués ici. Dès lors, une chaîne de détection peut donc comporter un nombre quelconque d'opérateurs spécialisés.

Il a été expérimentalement démontré que ces six opérateurs particuliers permettent une bonne détection des types de criques de rive, ainsi que leur différentiation et leur caractérisation.

Le fait de disposer d'un nombre limité d'opérateurs (par exemple 6) permet une efficience computationnelle du procédé, qui peut ainsi permettre une détection de crique en temps-réel sans nécessiter de capacité calculatoire inhabituelle. Comme il a été vu précédemment, la possibilité de faire reposer la détection sur un nombre limité d'opérateurs est liée à la typologie des défauts (criques et, en particulier, criques de rives) que l'on cherche à détecter.

Selon le mode de réalisation illustré, chaque opérateur 102, 103, 104, 105, 106, 107 est associé à un seuillage respectif 108, 109, 110, 111, 112, 113. Des seuils peuvent être appliqués à chaque opérateur afin de déterminer les pixels finalement détectés par chaque opérateur. Ces seuils peuvent être déterminés automatiquement et/ou dépendre du motif propre à l'opérateur associé, et/ou du niveau de gris moyen de l'image traité.

Ainsi, chaque opérateur peut détecter des pixels susceptibles de correspondre à une crique. On combine donc les résultats particuliers de ces opérateurs pour fournir une image résultat regroupant ces différents pixels détectés. Comme vu précédemment, cette combinaison peut consister à appliquer un opérateur « ou logique » aux résultats des différents opérateurs.

Ce mécanisme permet de tirer profit des performances des opérateurs spécialisés pour des motifs déterminés (correspondant à ce que l'on cherche à détecter), tout en conservant un caractère généraliste de la détection en combinant les résultats d'une pluralité d'opérateurs spécialisés.

Par ailleurs, des changements de résolution 101, 116 peuvent être mis en œuvre.

Par exemple, un facteur de changement de résolution peut être appliqué dans une étape 101, en amont de l'application des opérateurs 102-107. En aval, un traitement symétrique 116 peut consister à rétablir la résolution initiale de l'image traitée.

Par exemple, les changements de résolution peuvent consister à réduire la résolution de détection d'un facteur 2, 4, 8...

En outre, un ou des opérateurs d'amélioration 115 peuvent être appliqués au résultat de la chaîne de détection 100.

Selon un mode de réalisation, une pluralité de chaînes de détection peut être appliquée en parallèle.

Selon un mode de réalisation, un traitement différencié est appliqué à cette ou ces chaînes de détection.

Ce traitement différencié peut notamment être un changement de résolutions tel que précédemment évoqué. D'autres traitements différenciés sont par ailleurs possibles : par exemple, différentes chaînes de détection peuvent comporter des ensembles différents d'opérateurs spécialisés.

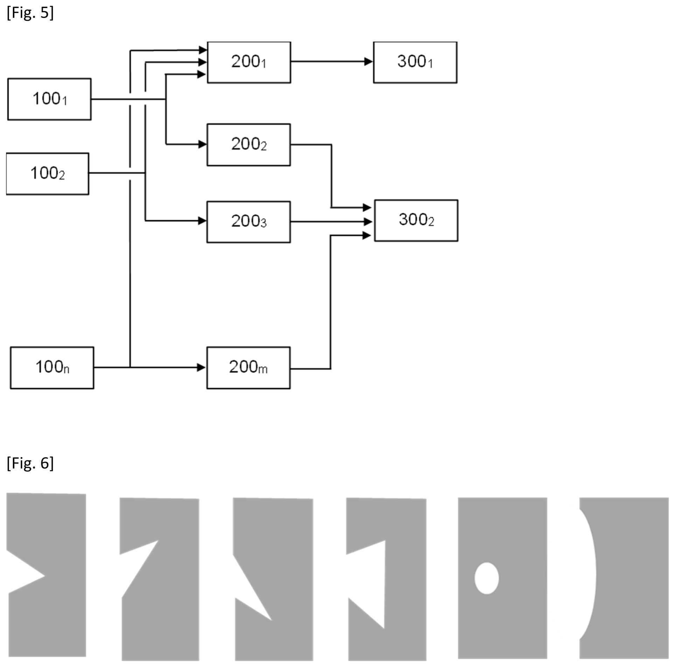

La **figure 5** illustre des étapes de traitement mises en œuvre par le dispositif de traitement, selon un mode de réalisation du procédé de détection de criques.

Dans ce mode de réalisation, n chaînes de détection 100₁, 100₂, ... 100ₙ sont appliquées aux images acquises.

Chaque chaine de détection peut correspondre à des traitements différenciés particuliers.

Comme évoqué précédemment, ces traitements différenciés peuvent être de différentes natures, et donc les chaînes de détection peuvent différer entre elles de différentes façons.

Par exemple, les traitements différenciés peuvent correspondre à un changement de résolution différent pour chaque chaîne de détection. Ainsi, une première chaîne de détection 100₁ peut appliquer un premier changement de résolution (par exemple une réduction par 2), une deuxième chaîne de détection 100₂ peut appliquer un deuxième changement de résolution, différent du premier (par exemple une réduction par 4), etc. jusqu'à une nième chaîne de détection 100ₙ qui peut appliquer encore un autre changement de résolution (consistant par exemple à conserver la résolution initiale).

Selon un mode de réalisation particulier, le résultat de chacune des chaînes de détection 100₁, 100₂, ..., 100ₙ est transmis à des plans de détection 200₁, 200₂, 200₃, ..., 200ₘ. « m » est le nombre de plans de détection prévus, par exemple 4. Ce nombre peut être égal ou différent du nombre n de chaînes de détection.

Un même plan de détection peut recevoir les données d'une ou de plusieurs chaînes de détection. Dans un tel cas, ces données peuvent combinées de différentes façons, par exemple sous la forme d'une addition ou « ou logique ».

Ce mode de réalisation particulier permet de conjuguer ensemble différentes chaînes de détection, mais il peut également être utile de pouvoir conserver séparément le résultat individuel de certaines chaînes de détection, par exemple à des fins de traçabilité, ou pour aider à la configuration des différents paramètres du procédé et système décrits, ou encore pour appliquer une segmentation spécifique, comme il sera vu ultérieurement, en vue de la détection des criques.

Egalement, il peut être proposé de permettre des visualisations individuelles de chaque plan de détection, permettant ainsi à un administrateur système d'avoir une meilleure maîtrise du processus de détection de criques décrit.

Ainsi, ce mode de réalisation basé sur des combinaisons entre un ensemble de chaînes de détection et un autre ensemble de plans de détections permet une grande flexibilité d'utilisation.

Dans l'exemple illustré en figure 5,
- la chaîne de détection 100₁ fournit ses données de sortie (image comportant des pixels correspondant à des criques potentielles) aux plans de détection 200₁ et 200₂,
- la chaîne de détection 100₂ fournit ses données de sortie aux plans de détection 200₁ et 200₃, et,
- la chaîne de détection 100ₙ fournit ses données de sortie aux plans de détection 200₁ et 200ₘ.

Il est ensuite proposé d'effectuer une segmentation des objets individuels détectés dans les images obtenues par la ou des chaîne(s) de détection et de les grouper, afin d'obtenir des « objets » ou zones d'intérêt correspondant à des probabilités de présence de criques.

La segmentation peut porter sur un objet détecté d'une chaîne de détection ou de plusieurs chaînes de détection.

Pour ce faire, les objets détectés par plusieurs chaînes de détection peuvent être combinés au moyen des plans de détection selon le mode de réalisation précédemment expliqué. Autrement dit, la segmentation consiste alors à déterminer une ou plusieurs images segmentées, chacune produite à partir d'un ensemble de plans de détection.

Les zones d'intérêt correspondant à des probabilités de présence de criques sont alors déterminées à partir de cette ou ces image(s)segmentée(s).

Dans l'exemple illustré en figure 5,
- une première segmentation 300₁ est effectuée à partir du plan de détection 200₁.
- une seconde segmentation 300₂ est effectuée à partir des plans de détection 200₂, 200₃, 200ₘ. Ces plans peuvent être combinés en additionnant les images, c'est-à-dire au moyen d'un opérateur de type « ou exclusif ».

Bien évidemment, il s'agit ici d'un exemple illustratif et un nombre quelconque de segmentation peut être obtenu, chacun à partir d'un nombre quelconque de chaînes de détection, optionnellement au moyen des plans des détections.

Dans l'exemple, on peut remarquer que les segmentations 300₁ et 300₂ sont pareillement effectuées à partir des images issues des chaînes de détection 100₁, 100₂, 100_{N}. Autrement dit, le mode de réalisation utilisant des plans de détection permet une grande flexibilité en permettant plusieurs façons alternatives d'obtenir un même résultat, en combinant les résultats des chaînes de détection à différents stades.

La segmentation vise à isoler des zones d'intérêt dans les images traitées (issues des chaînes de détection). Ces zones d'intérêt correspondent à, ou sont représentatives de, des probabilités de présence d'une crique. Autrement dit, la détermination d'une zone d'intérêt correspond à la détection d'une crique potentielle.

D'une façon générale, la segmentation est un ensemble de techniques visant à déterminer des zones, au sein d'une image, répondant à un critère, tel un critère d'homogénéité. Par exemple, les pixels d'une zone segmentée peuvent correspondre à des mêmes caractéristiques spécifiques : niveaux de gris, texture, intensité... La mesure de ressemblance des pixels d'une zone segmentée selon ces caractéristiques peut dépendre de paramètres (seuils...) mais aussi de la variation de ces caractéristiques par rapport aux pixels à l'extérieur de la zone segmentée.

La segmentation peut permettre de délimiter des zones, c'est-à-dire de déterminer des contours fermés en fonction des pixels correspondants à ces critères.

Ces zones segmentées peuvent être des zones d'intérêt qui, chacune, peut potentiellement correspondre à une crique de rive.

En particulier, seules certaines zones segmentées peuvent être considérées comme zones d'intérêt. Un filtrage peut ainsi être mis en place durant la phase de segmentation pour ne retenir qu'une partie des régions.

Par exemple, les zones détectées peuvent être ignorées ou regroupées selon des critères de taille et/ou de proximité.

Egalement, la position par rapport aux rives de la tôle 10 peut former un critère en ne retenant pas comme zone d'intérêt les zones trop éloignées des rives.

D'autres critères pour segmenter des zones d'intérêt peuvent comprendre :
- Les zones détectées doivent avoir des surfaces (exprimées par exemple en nombre de pixels) comprises entre deux bornes ;
- Les zones distantes de moins d'un seuil sont regroupées en une même zone d'intérêt ;
- Les zones d'intérêt (pouvant donc regrouper plusieurs zones détectées) doivent également avoir des surfaces comprises entre deux bornes.

Ces zones d'intérêt sont susceptibles de correspondre à des criques de rive avec une forte probabilité.

Du fait que des images numériques sont associées à un éclairage par la seconde source lumineuse, les zones d'intérêts peuvent concerner des criques fermées, c'est-à-dire ne laissant pas passer la lumière issue de la première source lumineuse.

Il est à noter que la possibilité offerte de générer une pluralité de zones d'intérêt selon différentes chaînes de détection, d'éventuellement les regrouper de différentes façons dans des plans de détection et de pouvoir effectuer différentes segmentations à partir de ces images permet à l'administrateur système de disposer de plusieurs vues distinctes d'une même zone d'intérêt. Il dispose ainsi de davantage d'information pour optimiser les réglages de détection et de segmentation.

Selon un mode de réalisation, le procédé peut en outre comporter une étape automatique, réalisée par le dispositif de traitement 40, de qualification, ou caractérisation, des criques correspondant aux zones d'intérêt. Cette qualification consiste notamment à assigner aux zones d'intérêt, une classe géométrique et/ou une gravité. Cette gravité peut induire une qualification de la tôle elle-même (c'est à dire une prédiction de la qualité de la tôle finie) et un risque pour la fabrication de la tôle, c'est-à-dire pour les différents équipements de la chaîne de fabrication.

Cette étape de qualification peut comprendre la détermination de caractéristiques permettant de décrire la zone d'intérêt et la crique de rive associée.

Ces caractéristiques peuvent par exemple comprendre une surface (par exemple en nombre de pixels, ou en mm, selon le rapport d'échelle entre la tôle et l'image numérique), des niveaux de gris (qui peuvent être comparés à ceux moyens de l'ensemble des images numériques), une position notamment une distance à la rive, etc.

Par ailleurs, des caractéristiques de forme ou topologiques peuvent être déterminées.

Ces caractéristiques de forme peuvent correspondre à une classification parmi des classes géométriques prédéterminées.

La **figure 6** illustre un ensemble de formes ou classes de criques, de gauche à droite : « convexe perpendiculaire », « convexe orientée vers l'amont », « convexe orientée vers l'aval », « concave », « trou en rive », « encoche » (« amont » et « aval » faisant référence au déplacement relatif du dispositif d'acquisition et de la tôle).

Ces formes forment un exemple indicatif, d'autres formes peuvent également être prédéterminés en sus ou à la place de ces 6 classes illustrées.

Cette classification en formes de criques permet un premier niveau de qualification de la crique : en effet, chaque forme peut être associée à un niveau de risque, ou de gravité. Par exemple, une crique orientée vers l'aval (deuxième classe depuis la gauche de la figure 6) ou concave (troisième classe) a tendance à accrocher les dispositifs de guidage de la tôle et à s'agrandir.

L'encoche peut correspondre à un traitement manuel effectué en amont pour éliminer un défaut, tel une crique de rive. Ainsi, une crique peut être détectée par un premier système de détection sur une chaîne de fabrication. Il est alors décidé que cette crique pouvait être localement traitée en provoquant une encoche (qui n'engendre pas de risque particulier du fait de son profil géométrique). Un second système de détection en aval détectera une zone d'intérêt représentative d'une crique et la classifiera en tant qu'encoche. Elle peut alors être associée à un risque, ou gravité, faible ou nulle.

En outre, des caractéristiques supplémentaires, d'ordre géométrique, peuvent être mesurées pour toute ou partie des zones d'intérêt.

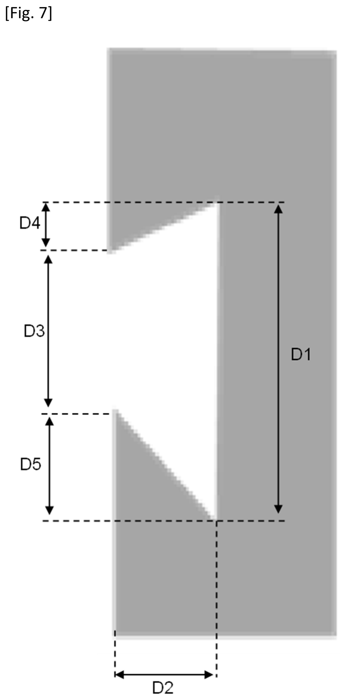

La **figure 7** illustre quelques caractéristiques qui peuvent être mesurées à partir d'une zone d'intérêt :
- Une caractéristique D1 représente la longueur maximale selon la direction de la rive ;
- Une caractéristique D2 représente la profondeur de la crique (c'est-à-dire la distance à la rive de son point le plus éloignée) ;
- Une caractéristique D3 représente l'ouverture de la crique ;
- Les caractéristiques D4 et D5 représentent des longueurs, respectivement amont et aval, de la crique.

Dans l'exemple illustré, nous avons D1=D3+D4+D5.

Bien évidemment, d'autres caractéristiques peuvent être définies en sus ou à la place de ces caractéristiques.

Cet ensemble de caractéristiques mesurées à partir d'une zone d'intérêt peut être comparé à des valeurs types associées à des classes géométriques déterminées et prédéfinies.

En fonction de cette comparaison, la zone d'intérêt est affectée à une classe de crique et à une sévérité, il peut alors être estimé une gravité, ou risque, pour la tôle et/ou pour la fabrication de la tôle.

On comprend de ce qui précède que ces paramètres spécifiques peuvent être prédéterminés selon les classes de criques.

Il est également possible de générer une classification automatique des criques. Le procédé consiste en la collecte d'images représentatives des différents types de criques et de les grouper par similarité. Les paramètres pour la classification et la discrimination des différentes classes de criques sont alors générés automatiquement par l'outil de classification du système. Ainsi l'apprentissage du système contribue à l'optimisation des performances de classification.

Ainsi, selon ce mode de réalisation, la détermination d'une forme, ou classe géométrique, d'une crique permet de calculer une gravité en comparant des caractéristiques mesurées pour la crique à des valeurs types, par exemple des seuils, différenciés pour chaque classe géométrique.

Selon un mode de réalisation, l'opérateur de la ligne de production dispose d'une interface dédiée lui proposant une cartographie des bords de bande inspectés, avec les résultats de la classification de l'ensemble des criques détectées. Il est donc à même de prendre une décision rapide sur les actions à mettre en œuvre ou pas.

Selon la gravité, différentes actions peuvent être envisagées par le dispositif de traitement 40.

La détection d'une crique peut être utilisée directement pour déclencher une action pour prévenir des risques.

Ces risques comprennent la casse de la tôle, l'aggravation de la crique, la fabrication finale d'une tôle de mauvaise qualité qui ne répondrait pas à des critères imposés par, notamment, le client, l'endommagement de la chaîne de fabrication, etc.

Cette action peut être le ralentissement ou l'arrêt de la chaîne de production, le temps qu'un opérateur humain puisse visualiser la zone d'intérêt, selon la ou les images générées par les deux caméras et/ou sur la tôle elle-même (dans ce dernier cas, la détection de crique lui indique directement où faire porter la vérification).

Un autre mode de réalisation peut consister à déclencher une alarme permettant à l'opérateur humain d'effectuer une rapide vérification sur la base des images générées par les caméras afin de décider d'arrêter ou non la chaîne de fabrication.

Par exemple, si la gravité atteint un premier niveau (par exemple si la gravité est estimée comme une valeur, si cette valeur dépasse un premier seuil), une alerte peut être provoquée.

Le risque de crique « grave » peut alors être signifié à un opérateur humain, en charge de la chaîne de fabrication.

En outre, si la gravité atteint un second niveau, plus élevé que le premier niveau, un arrêt d'urgence peut être déclenché.

Bien entendu, la présente invention n'est pas limitée aux exemples et au mode de réalisation décrits et représentés, mais est définie par les revendications. Elle est notamment susceptible de nombreuses variantes accessibles à l'homme de l'art. En particulier, les résultats de la détection d'une crique peuvent faire l'objet de différents traitements supplémentaires automatiques ou semi-automatiques.

## Revendications

1. Procédé de détection de criques, notamment de criques fermées, sur une tôle de métal (10), apparaissant en fabrication, comportant des étapes de :
- déplacement relatif de ladite tôle de métal (10) par rapport à un dispositif d'acquisition (20) selon un axe longitudinal ;
- acquisitions de premières et de deuxièmes images numériques, en alternance, par un capteur optique (21), lesdites premières et deuxièmes images numériques étant acquises en synchronisation avec l'activation respectivement d'une première source lumineuse (22) et d'une seconde source lumineuse (23), ladite première source lumineuse (22) étant située d'un côté opposé de ladite tôle de métal (10) par rapport audit capteur optique (21) et ladite seconde source lumineuse (23) étant située du même côté de ladite tôle de métal (10) que ledit capteur optique (21) ;
- application d'au moins une chaîne de détection auxdites premières et deuxièmes images numériques, comportant un ensemble d'opérateurs adaptés à la détection de motifs déterminés, par un dispositif de traitement (40) ;
- segmentation dans les images obtenues de ladite au moins une chaîne de détection, par ledit dispositif de traitement (40), afin d'obtenir des zones d'intérêt correspondant à des probabilités de présence de criques.

2. Procédé selon la revendication précédente, comportant en outre une étape de qualification de criques à partir desdites zones d'intérêt, comprenant, pour une zone d'intérêt, une assignation d'une classe géométrique et/ou d'une gravité.

3. Procédé selon la revendication précédente, dans lequel ladite classe géométrique appartient à un ensemble prédéterminé de formes de criques, tels que « convexe perpendiculaire », « convexe orientée vers l'amont », « convexe orientée vers l'aval », « concave », « trou en rive », « encoche ».

4. Procédé selon l'une des revendications 2 ou 3, dans lequel une gravité pour ladite tôle de métal et/ou pour la fabrication de ladite tôle de métal est déterminée à partir de ladite classe géométrique et d'un ensemble de caractéristiques mesurées à partir de ladite zone d'intérêt comparées à des valeurs types associées à ladite classe géométrique.

5. Procédé selon l'une des revendications précédentes, dans lequel une pluralité de chaînes de détection sont appliquée, ledit procédé comportant une obtention de plans de détection, par exemple en effectuant un « OU » logique des résultats d'un ensemble de chaînes de détection, ladite segmentation consistant alors à déterminer une ou plusieurs images segmentées, chacune à partir d'un ensemble de plans de détection, et à déterminer lesdites zones d'intérêt à partir desdites images segmentées.

6. Procédé selon l'une des revendications précédentes, dans lequel un traitement différencié est appliqué à ladite au moins chaîne de détection, notamment un changement de résolution.

7. Procédé selon l'une des revendications précédentes, comportant en outre un prétraitement desdites deuxièmes images numériques consistant à effectuer un lissage par moyenne des pixels de ladite image ligne par ligne selon ledit déplacement relatif.

8. Procédé selon l'une des revendications précédentes, selon lequel ledit capteur optique (21) et lesdites première et seconde sources lumineuses (22, 23) sont commandés en fonction d'un rythme fourni par un détecteur de mouvement (31) mesurant ledit déplacement relatif.

9. Système pour la détection de criques, notamment de criques fermées, sur une tôle de métal (10) apparaissant en fabrication, comportant un dispositif d'acquisition (20), ladite tôle de métal étant mise en mouvement par rapport audit dispositif d'acquisition (20) par un dispositif de déplacement (30), et un dispositif de traitement (40) adapté pour :
- piloter des acquisitions de premières et de deuxièmes images numériques, en alternance, par un capteur optique (21) dudit système d'acquisition (20), lesdites premières et deuxièmes images numériques étant acquises en synchronisation avec l'activation respectivement d'une première source lumineuse (22) et d'une seconde source lumineuse (23), ladite première source lumineuse (22) étant située d'un côté opposé de ladite tôle de métal (10) par rapport audit capteur optique (21) et ladite seconde source lumineuse (23) étant située du même côté de ladite tôle de métal (10) que ledit capteur optique (21) ;
- appliquer au moins une chaîne de détection auxdites premières et deuxièmes images numériques, comportant un ensemble d'opérateurs adaptés à la détection de motifs déterminés ;
- effectuer une segmentation dans lesdites images obtenues de ladite au moins une chaîne de détection, afin d'obtenir des zones d'intérêt correspondant à des probabilités de présence de criques.

10. Programme d'ordinateur apte à être mis en œuvre sur un serveur (S), le programme comprenant des instructions de code qui conduise le système selon la revendication 9 à exécuter les étapes du procédé définie dans les revendications 1 à 8.
